Europäisches Patentamt

European Patent Office

Office européen des brevets

(19)

(11) Numéro de publication: **0 130 903**
**A1**

(12) **DEMANDE DE BREVET EUROPEEN**

(21) Numéro de dépôt: 84401339.1

(51) Int. Cl.⁴: **F 16 K 11/06**

(22) Date de dépôt: 26.06.84

(30) Priorité: 05.07.83 FR 8311190

(71) Demandeur: **L.C.C.-C.I.C.E. - COMPAGNIE EUROPEENNE DE COMPOSANTS ELECTRONIQUES,** 50, rue Jean-Pierre Timbaud B.P. 301, F-92402 Courbevoie (FR)
Demandeur: **ETABLISSEMENTS TRUBERT, 194, Avenue du Général Leclerc, F-78220 Viroflay (FR)**

(43) Date de publication de la demande: 09.01.85
Bulletin 85/2

(72) Inventeur: **Caria, Bernard, THOMSON-CSF SCPI 173, bld Haussmann, F-75379 Paris Cedex 08 (FR)**
Inventeur: **Trubert, Denis, THOMSON-CSF SCPI 173, bld Haussmann, F-75379 Paris Cedex 08 (FR)**

(84) Etats contractants désignés: **AT BE CH DE GB IT LI LU NL SE**

(74) Mandataire: **Vesin, Jacques et al, THOMSON-CSF SCPI 173, Bld Haussmann, F-75379 Paris Cedex 08 (FR)**

(54) Mécanisme de commande pour mitigeur, et mitigeur utilisant un tel mécanisme.

(57) Ce mécanisme comporte un levier de commande unique se prolongeant, au-delà de son axe de rotation (5) par un prolongement (25), une pièce de renvoi (7) et une équerre (15), le mouvement dans un plan vertical de ladite équerre (15) entraînant le déplacement de la plaquette mobile (36) dudit mitigeur dans une première direction. La pièce rigide (7) comporte deux articulations de type rotule (6, 8, 9, 18), l'une (6, 8) coopérant avec le prolongement du levier de commande (4), l'autre (9, 18) coopérant d'un bras (17) de l'équerre (15). L'axe de rotation (O) de la rotule supérieure (6, 8) est situé sensiblement sur l'axe de rotation (A'A') du manchon cylindrique (23) assurant par manœuvre du levier (4), dans un plan horizontal, le déplacement du disque mobile (36) dans une seconde direction, orthogonale à la première, par l'intermédiaire d'un doigt de came (24) solidaire du manchon (23).

## MECANISME DE COMMANDE POUR MITIGEUR
## ET MITIGEUR UTILISANT UN TEL MECANISME

La présente invention concerne un mécanisme de commande de mitigeur ainsi qu'un mitigeur mono-commande utilisant un tel mécanisme et destiné au mélange de deux liquides.

Les mitigeurs mono-commande sont des vannes de mélange de deux liquides dans lesquelles le déplacement du levier de commande dans un plan vertical fait varier le débit du mélange et dans un plan perpendiculaire à celui-ci, les proportions du mélange. Ceci est obtenu généralement par coulissement de deux plaquettes céramiques munies l'une au moins de deux ouvertures d'entrée des liquides, l'autre d'au moins une ouverture assurant le dosage et donc le mélange des liquides.

Le brevet français 1 470 000 décrit un mitigeur dans lequel la tige de commande, manœuvrable sur le côté, entraine dans son déplacement dans un plan vertical, une translation de la plaquette mobile sur la plaquette fixe de manière à modifier le débit du liquide, et dans sa rotation de gauche à droite ou vice-versa, la rotation de la plaquette mobile sur la plaquette fixe de manière à modifier la température du mélange eau chaude - eau froide.

On constate en pratique que les mécanismes de commande du mélange par mouvement circulaire ne permettant pas de conserver la même proportion du mélange lorsqu'on fait varier le débit par simple mouvement dans un plan vertical de ladite tige. On comprend que l'utilisateur, dans le cas de mitigeurs du type eau chaude - eau froide, soit particulièrement gêné par ce problème compte tenu de la variation de température résultant de la variation de débit recherchée par celui-ci.

Une amélioration à ce type de mitigeur a été apportée par les mitigeurs, tels que décrits par exemple dans le brevet français 2 466 692, dans lesquels le déplacement des plaquettes de céramique s'effectue selon deux translations orthogonales. Dans ce brevet, toutefois, la tige de commande, manœuvrable sur le dessus du mitigeur, comporte une rotule disposée sensiblement sur l'axe de symétrie verticale dudit mitigeur. Le mécanisme de transmission des deux mouvements orthogonaux est alors particulièrement simple mais ce type de commande par le dessus présente un grave inconvénient. Pour obtenir une bonne précision de manœuvre, il est nécessaire d'avoir une tige de commande suffisamment longue. Dans la majorité des installations sanitaires, une longue tige de commande n'est cependant pas admissible car elle vient au contact des éléments fixes de la pièce dans laquelle est installé le mitigeur. Une tige de manœuvre plus courte comporte l'inconvénient d'un manque de précision lorsqu'on veut en particulier obtenir de faibles variations de débit et/ou de mélange.

Un perfectionnement à ce type de mitigeur est décrit dans la demande de brevet allemande 3 106 143. Dans cette demande, les plaquettes, qui ont des ouvertures rectangulaires, se déplacent selon deux mouvements orthogonaux, l'un correspondant au débit, l'autre au mélange. Le mécanisme de commande utilisé fait appel à un levier, manœuvrable sur le côté, levier pouvant pivoter dans le plan vertical autour d'un axe situé sur le côté de la calotte supérieure du mitigeur et qui se prolonge par une articulation du type rotule reliant d'une part l'extrémité de la tige de commande au-delà de son axe de rotation dans le plan vertical, et d'autre part l'extrémité d'un premier bras d'une équerre dont l'extrémité de l'autre bras est reliée à une pièce de commande d'un disque mobile, ladite équerre pouvant pivoter autour d'un axe fixe situé à l'intersection de ses bras. Ce mécanisme de commande permet un déplacement d'avant en arrière de la plaquette mobile par rapport à la plaquette fixe, identique quelle que soit la position de la tige de commande dans le plan horizontal. La variation du mélange est obtenue à l'aide d'un manchon cylindrique solidaire de la tige de manoeuvre au niveau de son axe de rotation, manchon lié à un doigt de came venant commander le déplacement de gauche à droite d'une pièce elle-même liée à la plaquette mobile. La rotule précitée placée sensiblement sur l'axe de rotation du manchon cylindrique permet de séparer les deux mouvements et d'obtenir des déplacements indépendants dans les deux directions orthogonales. Toutefois, une telle solution comporte un inconvénient majeur : elle nécessite de placer sensiblement dans le prolongement les uns des autres la tige de manoeuvre et l'équerre (son premier bras) ce qui conduit à un encombrement important de ce dispositif, peu compatible avec les exigences de faibles dimensionnements de tels mitigeurs. Si l'on veut réduire l'encombrement d'un tel mécanisme de commande, on ne peut que diminuer la taille respective de ces pièces ce qui diminue d'autant la précision de commande des différents mouvements avec les inconvénients cités plus haut, ainsi que la résistance mécanique desdites pièces.

Il n'existe donc pas à l'heure actuelle de mitigeurs dont l'extrémité manœuvrable du levier de commande soit placée sur le côté de la calotte ou du corps de celui-ci, ayant un encombrement réduit, et permettant un mouvement des plaquettes dans deux directions orthogonales, les deux mouvements orthogonaux étant indépendants l'un de l'autre (variation de débit sans variation du mélange et vice-versa).

Le dispositif selon l'invention permet de résoudre le problème posé ci-dessus.

Dans ce but, le mécanisme de commande de mitigeur selon l'invention, mitigeur destiné au mélange d'un premier et d'un deuxième liquide et comprenant un corps sensiblement cylindrique dans lequel sont placées deux plaquettes munies d'ouvertures respectives, une plaquette d'entrée fixe, munie de deux ouvertures d'entrée du premier et du second liquide, une plaquette mobile se déplaçant au contact de la plaquette fixe comportant au moins une ouverture, ledit corps comportant en outre une ouverture de sortie du mélange, ledit mécanisme comportant :

- des moyens de déplacement dans une première direction de la plaquette mobile par glissement sur la plaquette fixe, lesdits moyens comportant un levier de commande articulé autour d'un premier axe horizontal fixe par rapport au levier, permettant un déplacement de celui-ci dans un plan vertical et comportant un prolongement au-delà de cet axe, ce prolongement étant relié par des moyens d'articulation à un premier bras d'une équerre mobile autour d'un second axe horizontal fixe et disposé sensiblement à l'intersection des deux bras de celle-ci, le second bras étant relié à un sous-ensemble d'entrainement de la plaquette mobile pour le déplacement de celle-ci dans la première direction,

- des moyens de déplacement dans une seconde direction, orthogonale à la première, de la plaquette mobile par glissement sur la plaquette fixe, lesdits moyens étant constitués par ledit levier de commande solidaire d'un tambour disposé sensiblement coaxialement avec la plaquette fixe et entraîné en rotation autour de cet axe vertical par un mouvement dans un plan horizontal dudit levier de commande, ledit tambour étant muni sur sa partie inférieure d'un doigt de came, qui coopère avec le sous-ensemble d'entrainement de la plaquette mobile pour le déplacement de celle-ci dans la seconde direction,

est caractérisé en ce que les moyens d'articulation sont constitués par une pièce rigide coopérant à chaque extrémité par l'intermédiaire d'une rotule avec le prolongement du levier de commande d'une part, et avec le premier bras de l'équerre d'autre part, le centre de rotation de l'une au moins desdites rotules étant situé sensiblement sur l'axe de rotation du tambour.

De préférence, cette pièce rigide sera une pièce en forme de Z comportant un bras incliné par rapport à l'axe du tambour et deux logements formant rotules respectivements avec le prolongement de la tige de commande des extrémités du premier bras de l'équerre, le centre de rotation de la rotule supérieure étant situé sensiblement sur l'axe de rotation du tambour. Les têtes des rotules seront de préférence capables de se déplacer dans leurs logements respectifs dans un plan horizontal comme on le verra par la suite.

On placera de préférence les premier et second axes de rotation horizontaux de part et d'autre de l'axe vertical du tambour.

La pièce en forme de Z coulissera verticalement dans des moyens de guidage afin de faciliter son déplacement de haut en bas.

Bien entendu, les ouvertures des plaquettes céramiques que l'on met en coïncidence pour réaliser ce mélange de liquides doivent avoir certaines parties "actives" de leurs pourtours délimitées par des droites parallèles aux deux directions orthogonales de déplacement desdites plaquettes, si l'on veut maintenir l'indépendance des mouvements et des résultats associés. Par "parties actives", on entend les parties de pourtour desdites ouvertures, qui participent au mélange des liquides.

L'invention sera mieux comprise à l'aide des exemples de réalisation ci-joints, donnés à titre non limitatif, conjointement avec les figures qui représentent :

- la figure 1, un schéma de principe d'un mécanisme de l'art antérieur;

- la figure 2, un schéma de principe selon l'invention;

- la figure 3, une vue en coupe d'un exemple de réalisation du mécanisme de commande d'un mitigeur selon l'invention;

- la figure 4, une vue éclatée du module inférieur du mitigeur;

- la figure 5, une vue éclatée du module supérieur de commande du mitigeur;

- la figure 6, une vue éclatée de l'étrier supérieur du module de la figure 5.

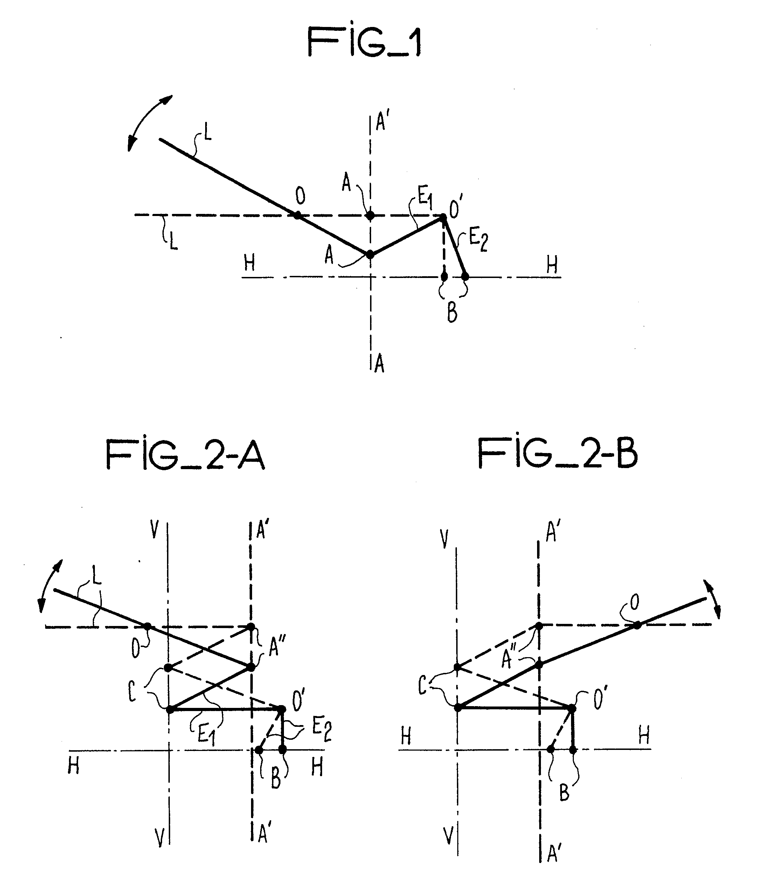

Sur la figure 1, est représenté un schéma de principe du mécanisme tel que décrit dans l'art antérieur (demande allemande précitée). Le levier L peut pivoter autour de l'axe O, fixe dans le plan de la figure, suivant les indications de la flèche mentionnées sur celle-ci. Au cours de son pivotement de haut en bas, ce levier L entraine l'articulation sous forme de rotule A à se déplacer sur l'axe vertical A'A'. L'équerre comportant deux bras $E_1$ et $E_2$ pivote autour d'un axe fixe O'. Cet axe fixe est situé à l'intersection des deux bras $E_1$, $E_2$. Le bras $E_1$ relie la rotule A à O' et $E_2$ relie O' au point B qui est également une articulation sous forme de rotule liant le bras $E_2$ à une pièce mobile de gauche à droite sur la figure, B se déplaçant alors sur l'axe horizontal HH. Le mécanisme, selon l'art antérieur, passe alors d'une position en trait plein sur la figure à une position en pointillés par rotation du levier L autour de l'axe O. L'articulation en forme de rotule A comporte donc également deux bras de longueurs variables OA et O'A compte tenu du fait que O et O' sont des axes fixes dans le plan de la figure. Sur cette figure, on n'a illustré que le mécanisme simplifié permettant le déplacement du point B selon l'axe horizontal HH, ce point B étant généralement solidaire d'une pièce entrainant le déplacement d'une plaquette de céramique ou directement solidaire de celle-ci. Concernant le déplacement du levier L dans un plan perpendiculaire au plan de la figure, on se reportera à la demande allemande précitée.

La figure 2 représente schématiquement un mécanisme selon deux variantes, d'entrainement des plaquettes de céramique de mitigeur selon l'invention. Sur cette figure, les mêmes éléments que ceux de la figure 1 portent les mêmes références. Le levier de commande L passant par le point fixe O dans le plan de la figure (axe de rotation dans ce plan) se prolonge comme précédemment jusqu'au point A" représentant une articulation sous forme de rotule amenée à se déplacer verticalement selon l'axe A'A'. Cette articulation sous forme de rotule A" est reliée à une équerre $E_1$, $E_2$ comme précédemment, par l'intermédiaire d'une pièce rigide A"C. L'articulation C est elle-même une articulation du type rotule. Au cours d'une rotation du levier L autour de l'axe O, l'articulation A" se déplace verticalement sur l'axe A'A' (la longueur du bras OA" est donc variable) tandis que l'articulation sous forme de rotule C se déplace également sur un axe vertical VV parallèle à A'A', de sorte que le bras rigide A"C garde la même longueur au cours de ce déplacement. Par contre, le bras $E_1$ de l'équerre, lors du pivotement de celle-ci autour de l'axe fixe O', s'allonge également pour permettre le déplacement de C sur un axe vertical.

Dans le cas de la figure 2, le but est de maintenir l'articulation A" sur un axe vertical A'A' au cours de son déplacement, ledit axe vertical étant l'axe de rotation du levier L dans un plan perpendiculaire au plan de la figure, rotation permettant le déplacement des plaquettes céramiques dans la direction perpendiculaire à celui résultant du déplacement du levier dans le plan de la figure. Il est fondamental de maintenir cette articulation sur cet axe quelque soit la position du levier L en rotation pour assurer un mouvement de rotation du levier sans interaction sur le mouvement de l'équerre autrement dit sans déplacement du point B sur l'axe HH.

En pratique, on ne peut rigoureusement maintenir la tête de rotule sur un axe vertical compte tenu du fait que l'axe de rotation O est fixe et qu'il est trop coûteux de prévoir un bras OA" télescopique. On obtient une solution mécaniquement équivalente en permettant un déplacement de la tête de rotule dans un plan horizontal, à l'intérieur de son logement, le corps de ce dernier étant guidé verticalement comme on le verra par la suite. C'est d'ailleurs un autre avantage de l'invention : le prolongement OA étant de longueur fixe, O se déplace sur une portion de cercle. Pour pouvoir assimiler cette portion de cercle à sa tangente, il suffit, par exemple que le déplacement OA dans le plan de la figure soit faible. Si ce déplacement est faible, il doit engendrer un déplacement plus important du bras de l'équerre commandant le mouvement de la plaquette mobile. Ce bras doit donc être le plus grand possible ce qui augmente encore l'encombrement du système de l'art antérieur (ou à dimensions égales, donne une course beaucoup plus grande à la plaquette mobile du mitigeur selon l'invention).

Les figures 2a et 2b sont des variantes respectives du mécanisme selon l'invention. La variante de la figure 2a est la variante la plus couramment utilisée dans laquelle les deux axes de rotation O et O' sont situés de part et d'autre de l'axe vertical de rotation A'A' tandis que sur la figure 2b, ces deux axes O et O' sont situés du même côté de l'axe A'A'. Ceci veut dire en particulier que dans le cas du mécanisme selon l'invention, contrairement au mécanisme de l'art antérieur, le levier peut être disposé dans n'importe quelle position par rapport au plan de l'équerre. On peut en particulier disposer ce levier sur le côté de la calotte supérieure du mitigeur ou comme représenté sur la figure 1 sur la partie arrière (comparé à la figure 2a) de ladite calotte.

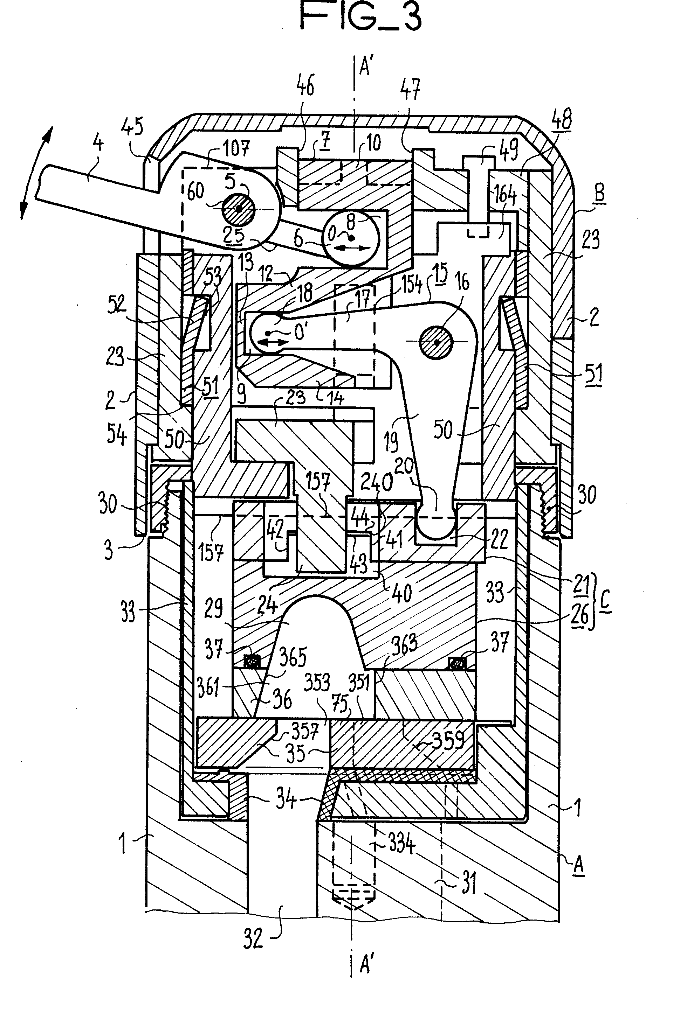

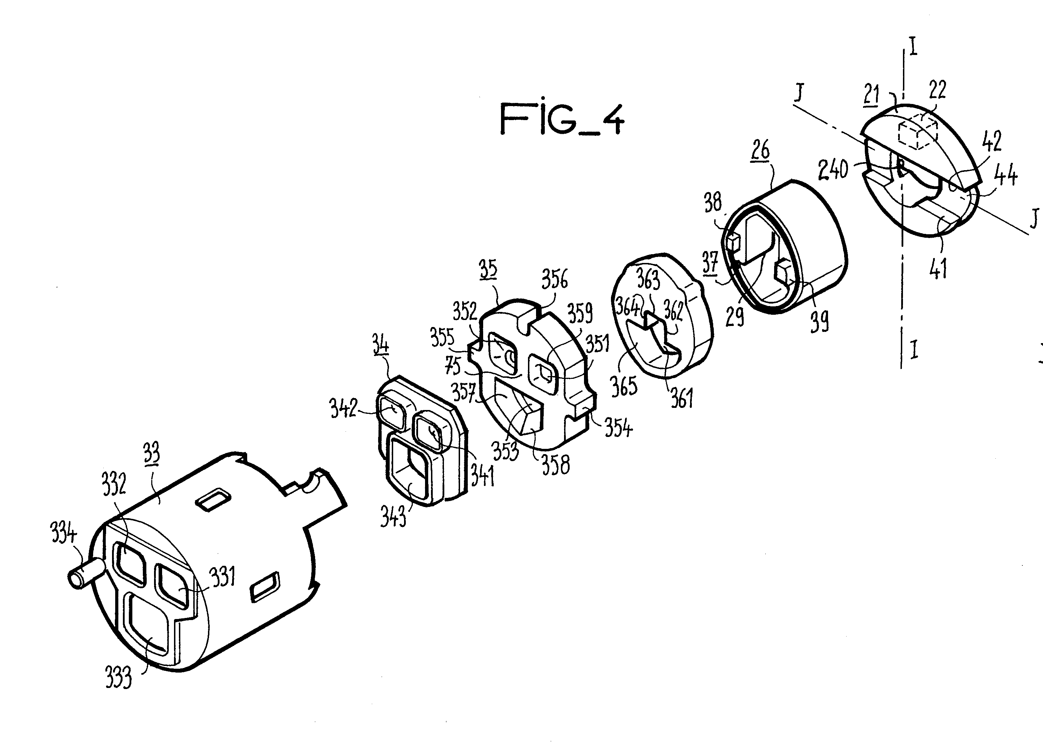

Sur la figure 3, est représentée une vue en coupe du mitigeur selon l'invention et son mécanisme de commande. Ce mitigeur se compose de deux parties A et B, cette dernière étant vissée sur la première à l'aide du filetage 30. Le module inférieure A comporte les arrivées de liquide 31 (une seule d'entre elles est vue sur cette figure) et la conduite de sortie du mélange 32, traversant le corps 1 de ce module A. A l'intérieur de celui-ci, est placé le module inférieur proprement dit comportant un corps extérieur 33 au fond duquel est logé un joint d'étanchéité 34 sur lequel s'appuie la plaquette céramique fixe 35. Au contact de celle-ci, est disposée la plaquette mobile 36 capable d'un déplacement de gauche à droite et d'avant en arrière par rapport au plan de la figure. Au-dessus de cette plaquette mobile 36, est disposée une pièce chapeau 26 portant un joint d'étanchéité circulaire 37 comportant une ouverture borgne 29 de renvoi du liquide mélangé. Cette pièce en forme de chapeau 26 est solidaire du disque mobile 27 à l'aide d'un système d'ergot 38, 39 coopérant avec les logements correspondants du disque mobile (voir figure 4). Sur sa partie supérieure, cette pièce 26 en forme de chapeau comporte un logement 40 dans lequel est placé le doigt de came 24 solidaire du tambour 23, ainsi qu'un rail de guidage 41, 42, 43 de la pièce en forme de plateau 21. Celle-ci possède en effet une rainure complémentaire 44 autorisant un coulissement dans un plan horinzontal perpendiculaire au plan de la figure. Par contre, la rainure 44 s'appuyant sur les bords 41, 42 du rail de guidage, entraîne dans son déplacement de gauche à droite sur la figure la pièce en forme de chapeau 26 entraînant elle-même le disque mobile 27. Le déplacement solidaire de la pièce chapeau et de la pièce plateau est guidé par la rainure 157 schématisée en pointillés sur la figure. De la même manière, le déplacement du doigt de came 24 dans un plan vertical perpendiculaire au plan de la figure, entraîne le déplacement de la pièce chapeau 26 qui glisse sur le rail de guidage 41, 42, 43 et se déplace donc indépendamment de la pièce plateau 21 dans le plan perpendiculaire au plan de la figure. La pièce plateau 21 et la pièce chapeau 26 forment le sous-ensemble d'entrainement (C) de la plaquette mobile 36. Bien entendu, ce sous-ensemble d'entrainement de la plaquette mobile 36 aurait pu être constitué de trois parties comme dans la demande allemande précitée. Dans la présente invention en effet, la pièce chapeau assure deux fonctions : le renvoi du liquide mélangé par l'intermédiaire du trou borgne 29 et le déplacement de la plaquette mobile 36. Les deux fonctions avaient été séparées et correspondaient à deux pièces distincts dans l'antériorité. Autrement dit, le mécanisme selon l'invention s'applique également aux mitigeurs comportant trois plaquettes.

Le module supérieur B du mitigeur selon l'invention comporte plus spécialement le mécanisme de commande du mouvement de la pièce plateau et de la pièce chapeau 21 et 26. La calotte extérieure 2 du mitigeur comporte une ouverture latérale 45 de laquelle sort la tige de commande 4. Celle-ci est mobile en rotation autour d'un axe 5 perpendiculaire au plan de la figure lorsque cette tige de commande est en position médiane. Elle se prolonge par un prolongement 25 se terminant par une partie sphérique 6 de centre O. Cette partie sphérique 6 est placée dans un logement rectangulaire 8 d'une pièce 7 en forme de Z. Elle forme avec celui-ci une articulation du type rotule. Cette pièce 7 dans sa partie supérieure 10 peut se déplacer sous l'action d'une rotation dans le plan de la figure de la tige de commande 4, verticalement, grâce aux parois de guidage 46 et 47 d'une ouverture par exemple cylindrique située dans l'étrier 48. La partie supérieure 10 de la pièce rigide 7, de section rectangulaire sur la figure, se prolonge par un bras vertical 11 de section également rectangulaire se prolongeant lui-même par un bras incliné 12 (vers la gauche sur la figure). Ce bras incliné est prolongé par un bras vertical se terminant par un bras sensiblement horizontal 14. Les bras 12, 13 et 14 définissent un logement de section rectangulaire sur la figure, logement dans lequel vient se loger l'extrémité sphérique 18 de centre O', du bras 17 de l'équerre 15. Cette équerre 15 mobile en rotation dans le plan de la figure autour de l'axe fixe 16 perpendiculaire au plan de la figure se prolonge par un deuxième bras 19 sensiblement perpendiculaire au premier, dont l'extrémité sphérique vient se loger dans le logement 22 de forme sensiblement cubique également, logement 22 situé sur la partie supérieure de la pièce en forme de plateau 21. Le tambour 23 portant à son extrémité inférieure le doigt de came 24, est rendu solidaire du chassis 50, par l'intermédiaire du palier 51. On remarquera que les têtes de rotules 6 et 18 peuvent respectivement coulisser dans un plan horizontal comme cela a été indiqué plus haut.

La figure 4 représente une vue éclatée du module A inférieure du mitigeur décrit sur la figure précédente. Le boîtier 33 de forme cylindrique comporte sur sa face inférieure un pion de positionnement 334 pour son positionnement dans le chassis extérieur du mitigeur (chassis non représenté sur la figure) ainsi que trois ouvertures, deux ouvertures 331, 332 d'entrée de liquide avant mélange et une ouverture 333 de sortie du mélange. Dans ce boîtier 33, vient s'appliquer dans lesdites ouvertures le joint d'étanchéité 34 de forme représentée sur la figure. Ce joint 34 comporte une partie plane supérieure et, entourant les ouvertures d'entrée 341, 342 et de sortie 343, des manchons solidaires de cette face plane destinés à pénétrer dans les ouvertures 331, 332 et 333, de manière à assurer une bonne étanchéité. La longueur de ces parties manchonnées est suffisante pour venir au contact du chassis extérieur du mitigeur. Le disque fixe 35 vient ensuite se placer au-dessus du joint 34. Ce disque est maintenu de manière fixe dans le boîtier 33 par les ergots 354, 355 venant se placer dans des logements correspondants non représentés sur la figure, ainsi que la rainure 356 correspondant à un bossage dans le chassis 33 (non représenté sur la figure également). Il est à noter que les ouvertures de ce disque fixe ont une forme particulière qui apparait clairement sur cette figure ainsi que sur la figure 3. L'ouverture de sortie 353 comporte sur sa partie supérieure, au contact du disque mobile 36, des parois verticales se prolongeant par des parois inclinées 357, 358. Les ouvertures d'entrée de liquide 351, 352 comportent également des parois inclinées telles que 359 pour l'ouverture 351. L'inclinaison de ces parois répond également aux soucis de faible encombrement du mitigeur selon l'invention. En effet, les canalisations d'amenée de liquide se font généralement par des tuyaux métalliques de diamètre et d'espacement relativement importants. Si l'on maintient l'espacement initial correspondant des ouvertures, il sera nécessaire d'avoir un déplacement important de la plaquette mobile sur la plaquette fixe, avec une surface desdites plaquettes également importante. On réduit ainsi le déplacement des plaquettes et leurs surfaces en rapprochant le plus possible les ouvertures de ladite plaquette fixe 35. Bien entendu, la paroi centrale 75 séparant les ouvertures d'entrée et de sortie de la plaquette fixe doit être suffisante pour ne pas risquer d'être brisée en cours d'utilisation. Par conséquent, on réalise une réduction progressive de la taille des ouvertures 331, 332, 333 à l'aide de l'inclinaison des parois des ouvertures 351, 352, 353 de la plaquette fixe 35.

La plaquette mobile 36 disposée au-dessus de la plaquette fixe 35 comporte une seule ouverture 361, ladite ouverture comportant deux parois inclinées telles que 365 et trois parois 362, 363 et 364 orthogonales dont les directions seront parallèles aux directions de déplacement orthogonales de la plaquette définie plus haut. C'est cette partie "active" définie par les trois parois 362, 363, 364 de l'ouverture 361 qui définit le mélange du liquide issu des ouvertures 351 et 352, tandis que la partie restante de cette ouverture 361 plus grande et comportant des parties inclinées correspond à la sortie du liquide après mélange, ledit mélange ayant été effectué dans l'ouverture borgne 29 du chapeau 26.

La pièce chapeau 26 et la pièce plateau 21 représentent l'ensemble C défini plus haut. La pièce chapeau 26 comporte deux ergots 38 et 39 venant se loger dans des logements correspondants, non représentés sur la figure, de la plaquette mobile 36, de manière à rendre le disque 36 et la pièce chapeau 26 solidaires l'un de l'autre.

L'étanchéité est assurée par le joint torique 37, de manière à éviter les fuites de liquide provenant du trou borgne 29. La pièce chapeau 26 est liée à la pièce plateau 21 par un système de rail coulissant tel qu'expliqué en regard de la figure 3. La partie en relief 43 de ce rail, solidaire de la pièce chapeau 26, n'est pas représentée sur la figure. Par contre, on voit clairement les parois 41, 42 et 44 coopérant avec le rail 43 et formant une rainure dans la pièce chapeau 26. On notera également l'ouverture 240 traversant de part en part la pièce plateau 21 permettant le passage du doigt de came 24. On a également représenté le logement 22 dans lequel vient se loger la tête de rotule 20. Sur la figure 4, la coopération des pièces 21 et 26 est telle qu'elles se déplacent solidairement sous l'action de l'équerre dans le logement 22 le long de l'axe vertical II, tandis que sous l'action du doigt de came 24, la pièce chapeau 26 coulisse seule le long de l'axe horizontal JJ.

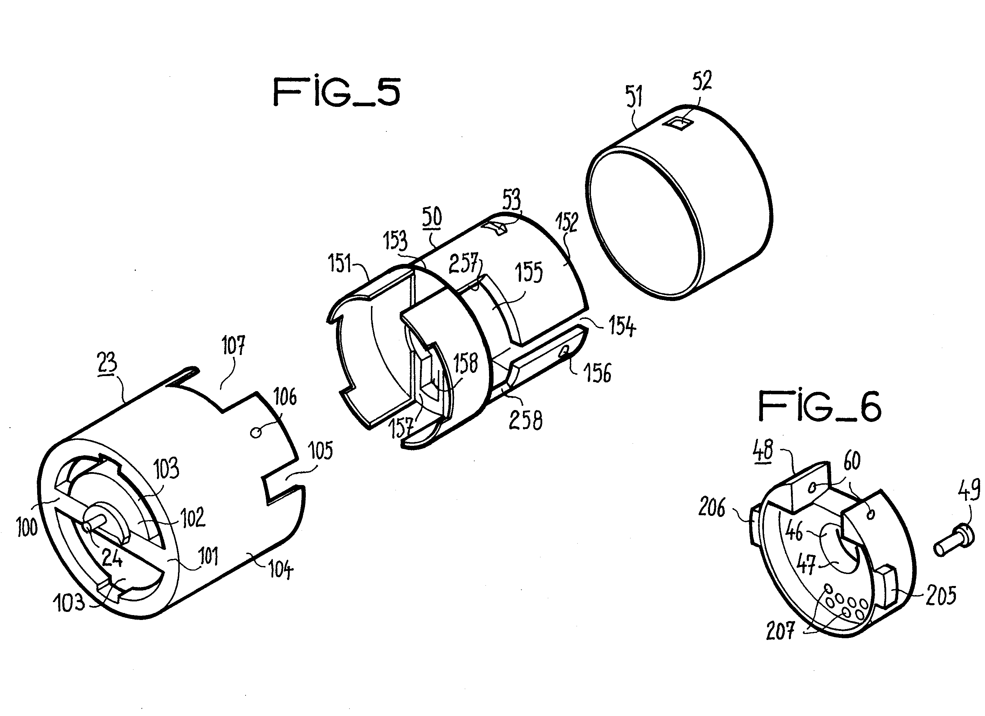

Sur la figure 5, sont représentées les trois pièces essentielles du module supérieur du mitigeur selon l'invention, pièces permettant essentiellement le déplacement du doigt de came et l'entrainement correspondant du disque mobile dans la seconde direction. Sont disposés successivement, de haut en bas sur la figure, le palier 51, le chassis fixe 50 et le tambour mobile 23.

Le tambour mobile 23 comporte sur sa partie inférieure, décentré par rapport à son axe, le doigt de came 24 porté par une partie pleine semi-circulaire 102 raccordée au corps 104 du tambour 23 par deux bras de liaison 100 et 101. Une rainure 103 circulaire pour le passage du chassis fixe 50 s'étend entre ces deux bras. Dans sa partie supérieure, ce tambour comporte une ouverture 107 de passage du levier de commande 4, un passage 106 de la clavette de fixation 60 dudit levier 4 ainsi qu'un logement (il en existe un autre symétrique par rapport à l'axe du tambour 23) 105 de la patte de fixation correspondante 205 (figure 6) de l'étrier 48.

Le chassis fixe 50 comporte une partie cylindrique inférieure 151 de diamètre sensiblement identique à celui du tambour mobile 23 et une partie supérieure 152 de diamètre sensiblement identique au diamètre de la rainure circulaire 103, les parties 151 et 152 étant reliées par une partie plane 153 formant palier (le palier 51 vient se loger entre le tambour mobile 23 et la partie supérieure 152).

La partie inférieure 151 comporte au niveau de la partie plane 153, une rainure de guidage 157 de la pièce plateau 21 pour le déplacement de celle-ci et de la pièce chapeau selon l'axe II (figure 4) sous l'action de l'équerre 15. La paroi de liaison entre 151 et 152 possède également une ouverture 158 en forme de trou de serrure pour le passage de ladite équerre 15. Cette équerre sera fixée en rotation par une clavette 16 passant dans l'ouverture 156 de la partie supérieure 152, celle-ci comportant en outre deux ouvertures verticales 154, symétriques par rapport à l'axe de rotation du tambour mobile 23, se prolongeant chacune par une ouverture horizontale 155, dont les extrémités 257 et 258 servent de butée aux bras de liaison 100 et 101 lors de la rotation de la pièce mobile 23. Au montage, la pièce fixe 50 est introduite sous la pièce mobile 23 en faisant passer les bras de liaison 100 et 101 dans les rainures verticales 154 jusqu'à arriver dans les rainures horizontales 155, la pièce mobile butant alors sur le palier 153. On introduit ensuite entre ces deux pièces 23 et 50 le palier 51 dont les "crevées" 52 viennent s'encastrer dans les ouvertures correspondantes 53 de la pièce fixe 50. Il est à noter également que les rainures 154 ont une fonction de guidage de la pièce rigide 7 dans sa partie inférieure, ladite pièce 7 comportant des pattes coulissant dans lesdites rainures 154 (l'ensemble est schématisé en pointillés sur la figure 3 par le repère 154).

La figure 6 représente l'étrier 48 qui vient coiffer le chassis fixe 50 et le palier 51, à l'intérieur du tambour mobile 23; les pièces 48 et 23 sont rendues solidaires l'une de l'autre par les pattes d'étrier 205 et 206 qui viennent se loger dans les rainures 105 (ainsi que par la clavette traversant les ouvertures 106 et 60). La butée 49 se loge, au choix, dans l'une des ouvertures 207. Elle vient bloquer le mouvement de rotation du tambour mobile 23 lorsqu'elle arrive au contact de la patte de butée 164 (figure 3), solidaire du chassis 50 au niveau de l'axe 16 de l'équerre 15.

Bien entendu, dans toute la description qui précède, les termes "vertical" et "horizontal" sont des termes relatifs, destinés à faciliter la définition de deux plans perpendiculaires correspondant l'un (plan vertical) au plan de déplacement de la tige de commande pour faire varier le débit du mélange, l'autre (plan horizontal) au plan de déplacement de la tige de commande pour la variation du mélange et au plan de déplacement de la plaquette mobile au contact de la plaquette fixe.

Dans toute la description précédente, on a fait mention d'une sortie du liquide de mélange par une ouverture correspondante du disque fixe inférieur. Bien entendu, comme cela est connu de l'homme de métier, l'évacuation du mélange peut être réalisée, sur le côté du corps du mitigeur, directement au niveau du renvoi 29 du mélange (figure 3), sans pour autant sortir du cadre de l'invention. On gagnerait ainsi encore sur la dimension des plaquettes, mais cette solution est considérée comme moins intéressante du point de vue circuit hydraulique.

15

<u>R E V E N D I C A T I O N S</u>

1. Mécanisme de commande de mitigeur à mono-commande pour le mélange d'un premier et d'un deuxième liquide, ledit mitigeur comprenant un corps sensiblement cylindrique dans lequel sont placées deux plaquettes munies d'ouvertures respectives, une plaquette d'entrée fixe, munie de deux ouvertures d'entrée du premier et du second liquide, une plaquette mobile se déplaçant au contact de la plaquette fixe comportant au moins une ouverture, ledit corps comportant en outre une ouverture de sortie du mélange, ledit mécanisme comportant :

- des moyens de déplacement dans une première direction de la plaquette mobile par glissement sur la plaquette fixe, lesdits moyens comportant un levier de commande articulé autour d'un premier axe horizontal fixe (5) par rapport au levier (4), permettant un déplacement de celui-ci dans un plan vertical et comportant un prolongement (25) au-delà de cet axe (5), ce prolongement (25) étant relié par des moyens d'articulation (7) à un premier bras (17) d'une équerre (15) mobile autour d'un second axe horizontal fixe (16) et disposé sensiblement à l'intersection des deux bras (17, 19) de celle-ci (15), le second bras (19) étant relié à un sous-ensemble d'entrainement (C) de la plaquette mobile (36) pour le déplacement de celle-ci (36) dans la première direction,

- des moyens de déplacement dans une seconde direction, orthogonale à la première, de la plaquette mobile (36) par glissement sur la plaquette fixe (35), lesdits moyens étant constitués par ledit levier de commande (4) solidaire d'un tambour (23) disposé sensiblement coaxialement avec la plaquette fixe (35) et entraîné en rotation autour de cet axe vertical (AA') par un mouvement dans un plan horizontal dudit levier de commande (4), ledit tambour (23) étant muni sur sa partie inférieure d'un doigt de came (24) qui coopère avec le sous-ensemble d'entrainement (C) de la plaquette mobile (36) pour le déplacement de celle-ci dans la seconde direction,

caractérisé en ce que les moyens d'articulation (7) sont constitués par une pièce rigide (7) coopérant à chaque extrémité par l'intermédiaire d'une rotule (6 et 8, 9 et 18) avec le prolongement (25) du levier de commande d'une part, et avec le premier bras (17) de l'équerre (15) d'autre part, le centre de rotation (O, O') de l'une au moins desdites rotules (6 et 8, 9 et 18) étant situé sensiblement sur l'axe de rotation (AA') du tambour (23).

2. Mécanisme de commande selon la revendication 1, caractérisé en ce que le sous-ensemble d'entrainement (C) comporte une pièce chapeau (26) et une pièce plateau (21) capables de se déplacer simultanément dans la première direction tandis qu'une seule (26) d'entre elles se déplace dans la seconde direction.

3. Mécanisme de commande selon la revendication 2, caractérisé en ce que la pièce chapeau (26) et la pièce en forme de plateau (21) coulissent l'une par rapport à l'autre dans la seconde direction, le doigt de came (24) traversant la pièce en forme de plateau (21) à travers une ouverture (240).

4. Mécanisme de commande selon l'une des revendications 1 à 3, caractérisé en ce que la pièce rigide (7) est une pièce en forme de Z comportant un bras incliné (12) par rapport à l'axe (AA') et deux logements (8, 9) formant rotule respectivement avec le prolongement (25) et l'extrémité (18) du premier bras (17) de l'équerre (15), le centre de rotation (O) de la rotule supérieure (6, 8) étant situé sur l'axe de rotation (AA') du tambour.

5. Mécanisme de commande selon l'une des revendications 1 à 4, caractérisé en ce que le centre de rotation (O') de la rotule inférieure et l'axe de rotation (16) de l'équerre (15) sont situés de part et d'autre de l'axe de rotation (AA') du tambour (23).

6. Mécanisme de commande selon l'une des revendications 1 à 5, caractérisé en ce que les premier et second axes de rotation horizontaux sont disposés respectivement de part et d'autre de l'axe vertical (AA').

7. Mécanisme de commande selon l'une des revendications 1 à 6, caractérisé en ce que la pièce en forme de Z coulisse verticalement dans des moyens de guidage (46, 47, 154).

8. Mécanisme de commande selon l'une des revendications 1 à 7, caractérisé en ce qu'il comporte des moyens de blocage (49, 157) en rotation du tambour (23) pour limiter la course en rotation de celui-ci.

9. Mécanisme de commande selon l'une des revendications 2 à 8, caractérisé en ce que la pièce en forme de chapeau (26) comporte une ouverture borgne (29) qui renvoit le liquide mélangé dans la canalisation de sortie.

10. Mitigeur à mono-commande pour le mélange d'un premier et d'un deuxième liquide, comportant :

- un corps sensiblement cylindrique dans lequel sont placées deux plaquettes munies d'ouvertures respectives, une plaquette d'entrée fixe, munie de deux ouvertures d'entrée du premier et du second liquide, une plaquette mobile se déplaçant au contact de la plaquette fixe comportant au moins une ouverture, ledit corps comportant une ouverture de sortie du mélange,

- des moyens d'amenée des premier et deuxième liquides et de sortie du mélange reliés respectivement aux ouvertures correspondantes du disque fixe et à l'ouverture de sortie du mélange, les parties de pourtours des ouvertures desdites plaquettes destinées à être mise en coïncidence étant parallèles à l'une ou l'autre de la première et de la seconde direction, caractérisé en ce qu'il comporte un mécanisme de commande pour le déplacement de la plaquette mobile sur la plaquette fixe conforme à l'une des revendications précédentes.

11. Mitigeur selon la revendication 10, dans lequel l'ouverture de sortie du mélange est située dans le disque fixe, caractérisé en ce que les ouvertures d'entrée et/ou de sortie de liquide dudit disque fixe comportent au moins une partie inclinée de manière à rapprocher lesdites ouvertures sur la face de sortie de la plaquette fixe pour limiter le déplacement de la plaquette mobile sur la plaquette fixe.

# FIG_1

# FIG_2-A

# FIG_2-B

FIG_3

0130903

2/4

FIG_4

3/4

0130903

FIG_5

FIG_6

0130903

**Office européen des brevets**

# RAPPORT DE RECHERCHE EUROPEENNE

Numéro de la demande

EP  84 40 1339

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| A | DE-A-2 757 525  (HANSA METALLWERKE)<br>* page 9, paragraphe 2 - page 10, paragraphe 1; figure * | 1 | F 16 K   11/06 |
| A | FR-A-2 410 776  (HANSA METALLWERKE)<br>--- | | |
| D,A | FR-A-1 470 000  (AMERICAN RADIATOR & STANDARD SANITARY CORPORATION)<br>--- | | |
| D,A | FR-A-2 466 692  (ETABLISSEMENTS PORCHER)<br>--- | | |
| D,A | DE-A-3 106 143  (GROTH)<br>----- | | **DOMAINES TECHNIQUES RECHERCHES (Int. Cl. ³)**<br><br>F 16 K |

Le présent rapport de recherche a été établi pour toutes les revendications

| Lieu de la recherche | Date d'achèvement de la recherche | Examinateur |
|---|---|---|
| LA HAYE | 24-09-1984 | VAN REETH A.L.J. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

............................................................................

& : membre de la même famille, document correspondant

OEB Form 1503. 03.82